# EUROPÄISCHE PATENTANMELDUNG

(11) **EP 3 389 058 A1**
(43) Veröffentlichungstag der Anmeldung: **17.10.2018**
(21) Anmeldenummer: 17165740.6
(22) Anmeldetag: 10.04.2017
(51) Int. Cl.: H01B 3/00, C08G 59/24, C08G 59/50, C08G 59/58, H01B 3/40, H02K 3/30, H02K 3/40

(54) **GLIMMSCHUTZBAND FÜR ELEKTRISCHE HOCHSPANNUNGSMASCHINE**

(71) Anmelder: Siemens Aktiengesellschaft, 80333 München (DE)
(72) Erfinder: HUBER, Jürgen, 91058 Erlangen (DE); LANG, Steffen, 91352 Hallerndorf (DE); SCHIRM, Dieter, 96149 Breitengüßbach (DE); ÜBLER, Matthias, 92289 Ursensollen (DE)

(57) **Zusammenfassung**

Die Erfindung betrifft ein Glimmschutzband für eine elektrische Hochspannungsmaschine mit phthalsäureanhydridfreien Epoxidharzen. Das hier erstmals vorgestellte Glimmschutzband ist mit seinen Komponenten, insbesondere der alles verbindenden polymeren Matrix, auch Bandkleber genannt, auf die neuen phthalsäureanhydrid-freien Band-Beschleuniger und VPI-Imprägnierharz-Härter eingestellt. Dazu liegt in der polymeren Matrix zumindest ein Anteil an Polyvinylalkohol vor.

## Beschreibung

Die Erfindung betrifft ein Glimmschutzband für eine elektrische Hochspannungsmaschine mit phthalsäureanhydridfreien Epoxidharzen als VPI-Imprägnierharz.

Glimmschutzbänder sind Stand der Technik und werden insbesondere bei Hochspannungsmaschinen eingesetzt. Hochspannungsmaschinen sind beispielsweise Turbogeneratoren in einem Kraftwerk zur Erzeugung elektrischer Energie. Derartige Turbogeneratoren weisen insbesondere eine Ständerwicklung auf, an die eine besonders hohe Anforderung bezüglich Festigkeit und Zuverlässigkeit gestellt ist. Insbesondere ist das Isoliersystem der Ständerwicklung an der Grenzfläche zwischen der Hauptisolierung und dem Blechpaket der Ständerwicklung durch eine hohe thermische, thermomechanische, dynamische und elektromechanische Betriebsbeanspruchung stark belastet, wodurch das Risiko einer Beschädigung des Isoliersystems der Ständerwicklung durch Teilentladung hoch ist.

Die Ständerwicklung weist einen mit der Hauptisolierung elektrisch isolierten Leiter auf, der in einer Nut gelagert ist, die in dem Blechpaket vorgesehenen ist. Beim Betrieb des Turbogenerators ist der Ständer einer thermischen Wechselbeanspruchung ausgesetzt, wodurch, hervorgerufen durch unterschiedliche Wärmeausdehnungsgeschwindigkeiten von dem Leiter und der Hauptisolierung, mechanische Spannungen in der Hauptisolierung erzeugt werden können. Dadurch bedingt kann ein örtlich begrenztes Ablösen der Hauptisolierung von dem Leiter auftreten, wodurch Hohlräume zwischen der Hauptisolierung und dem Leiter entstehen, in denen Teilentladungen zünden können. Die Teilentladungen können zu einer Beschädigung der Hauptisolierung führen, wodurch der Turbogenerator nicht betreibbar wäre. An den Nutaustritten steht herkömmlich der Leiter mit seiner Hauptisolierung vor, wo die Grenzfläche zwischen dem Leiter und der Hauptisolierung angeordnet ist.

Die Hauptisolierung der Wicklung gegen das Blechpaket ist ein elektrisch hoch beanspruchtes System. Im Betrieb entstehen hohe Spannungen, welche in dem Isoliervolumen zwischen dem Leiterstab und dem auf Erdpotential liegendem Blechpaket abzubauen sind. An den Kanten der Bleche im Blechpaket entstehen Feldüberhöhungen, die ihrerseits Teilentladungen hervorrufen und schließlich zu einer vorzeitigen Alterung und im schlimmsten Fall zu einer Zerstörung der Isolierung führen.

Die Austrittsstelle der Ständerstäbe/-spulenschenkel aus dem Blechpaket, die Nutaustrittsstelle, ist charakterisiert durch das Aufeinandertreffen zweier Isolierstoffe. In diesem Bereich bildet sich eine Grenzschicht zwischen der im Aggregatzustand festen Hauptisolierung und einem gasförmigen Medium, meist Luft oder Wasserstoff, aus. Durch die resultierende dielektrische Trennfläche zwischen der Hauptisolierung und der Luft entsteht eine klassische Gleitanordnung, die neben einer rein radialen Feldkomponente E_{rad}, wie sie im Bereich des Blechpakets vorkommt, zusätzlich eine tangentiale Feldkomponente Eₜₐₙ hat. Die dadurch tangential beanspruchten Grenzflächen, beispielsweise Hauptisolierung zu Luft, stellen besondere Schwachstellen in einer Isolieranordnung dar. Aufgrund der geringen elektrischen Festigkeit der Luft kann es schon bei vergleichsweise geringen Spannungen in diesem Bereich zu Teilentladungen, bedingt durch die lokale tangentiale Feldstärkenerhöhung von ca. 0,64kV/mm bei sauberer Oberfläche, kommen, die sich bei weiterer Steigerung der Spannung zu Gleitentladungen entlang der Isolierstoffoberfläche bis zu einem elektrischen Durchschlag, der durch einen Leiter-Erde-Kurzschluss charakterisiert ist, ausweiten können.

Diese kritische Belastung tritt vor allem während der Prüfungen von elektrisch rotierenden Hochspannungs-Maschinen auf. Bei der Berechnung und Auslegung des Endenglimmschutzes ist zu beachten, dass die höchste elektro-thermische Belastung des Systems nicht bei Betriebsspannung, sondern vielmehr bei der Kontrolle des Isoliersystems mit erhöhter Prüfspannung erfolgt. Durch Bildung von Gleitentladungen an der Oberfläche wird der Isolierstoff langfristig zerstört.

Insbesondere kann es durch Erwärmung, Erosion und vor allem auch durch Ladungsträgerinjektion durch Teilentladungen zur Zerstörung des Isolierstoffs und damit zu einer Beschädigung des Isolationssystems und schließlich zum Überschlag als Folge der Zerstörung des Endenglimmschutzes kommen. Durch lokale Wärmeentwicklung kann es aufgrund einer Arbeitspunktverschiebung zusätzlich zur Störung der Funktionsweise des Isoliersystems und zu einem Ansteigen der dielektrischen Verluste kommen. Dabei wird die Hauptisolierung ausgehend von der Inneren Potential Steuerung - IPS - in radialer Richtung bis zum Außenglimmschutz - AGS - abgebaut.

Der AGS hat einen gewissen Quadratwiderstand, der einen bestimmten unteren und oberen Grenzwert nicht unter- respektive überschreiten darf. Bei Unterschreitung des Grenzwertes können hohe induzierte Kreisströme, welche sich über die Enden des Blechpakets und dem Außenglimmschutz schließen, zu stromstarken Lichtbögen führen, dadurch entsteht so genannte Vibration und/oder Sparking. Bei zu hohem Widerstand kann es wiederum zu Hochspannungsfunkenerosion kommen. Idealerweise hat ein Außenglimmschutz eine ausgeprägte Anisotropie im Widerstandsverhalten, der Widerstand in axialer Richtung sollte hoch und in radialer Richtung gering sein. Diese Phänomene sind auch in einschlägiger Fachliteratur nachzulesen, beispielsweise in "Hochspannungstechnik" von A. Küchler, Springer Verlag, Vol 15, 2009 ISBN 3-540-78412-8 und "Design Dependent Slot Discharge and Vibration Sparking on High Voltage Windings" von M. Liese und M. Brown, IEEE Trans DIE, August 2008, pp 927-932.

Um Teilentladungen zu vermeiden, wird die Hauptisolierung von Wicklungsstäben /-Spulen und allen vergleichbaren Anordnungen bei elektrischen Betriebsmitteln mit höherer Bemessungsspannung wie Trafos, Durchführungen, Kabel etc. bei Betriebsspannungen von einigen kV mit einer inneren und einer äußeren Leitschicht gegen Hohlräume und Ablösungen abgeschirmt, eben durch IPS und AGS, wie oben erläutert.

Die Leitschichten des IPS und des AGS bestehen in der Regel aus Ruß- und/oder Graphit-haltigem Lack auf Basis einer polymeren Matrix. Keine Komponente des Lacks, weder der Ruß/Graphit, noch die polymere Matrix sind resistent gegenüber Teilentladungen. Trifft eine Teilentladung auf die Leitschicht, reagiert beispielsweise der Ruß mit dem umgebenden Sauerstoff zu CO₂ ab und löst sich förmlich in Luft auf. Gleiches gilt für die polymere Matrix. Die erforderliche Anisotropie ist bislang nicht gezielt einstellbar.

Aus der EP 2362399 und aus der DE 19839285 C1 sind Glimmschutzsysteme bekannt, in denen ein planarer Füllstoff gebunden in einer polymeren Matrix vorliegt. Der beschriebene planare Füllstoff besteht aus einem Glimmersubstrat, das mit dotiertem Zinnoxid beschichtet ist. Der Füllstoff ist insbesondere resistent gegenüber Teilentladungen.

Ganz grundsätzlich ist bei den mit planaren Füllstoffen gefüllten polymeren Matrizen der elektrische Widerstand in Bandrichtung deutlich geringer als der senkrecht durchs Band, was wiederum die elektrische Leitfähigkeit in radialer Richtung vermindert.

Zur Reduzierung der Feldstärkenüberhöhung im Bereich des Endes des Außenglimmschutzes wird eine kapazitiv-resistive Feldsteuerung eingesetzt. Die kapazitive Steuerung wird durch die Hauptisolierung realisiert, während die resistive Steuerung durch den Endenglimmschutz (EGS) stattfindet. Hierbei handelt es sich um leitfähige Oberflächenbeläge, die einen quadratischen Widerstand von ca. 10⁸ bis 10¹⁰ Ohm haben. Mit Hilfe der starken Nichtlinearität des Widerstandes der eingesetzten Materialien im EGS wird versucht, das elektrische Feld aus den Bereichen hoher Feldstärken zu verdrängen. Dieses hat in der Verringerung des spezifischen Widerstands mit steigender elektrischer Feldstärke ihre Ursache.

Die ohmschen Oberflächenbeläge können entweder durch Anstriche aus trocknenden und/oder härtbaren Harzen, welche unmittelbar auf die Isolierstoffoberfläche aufgebracht werden und/oder zusammen mit der Herstellung der Bänder hergestellt werden.

Die Hauptisolierung der Wicklung wird dann mit einem Imprägnierharz und beispielsweise durch ein damit ausgeführtes Vakuum-Pressure-Impregnating- Verfahren (VPI-Verfahren) imprägniert. Dabei kommen herkömmlich vor allem Epoxidharze mit säureanhydridischen, insbesondere Phthalsäure-anhydridischen Härtern zum Einsatz. Wegen der toxischen Bedenken gegen die uneingeschränkte Verwendung von Phthalsäureanhydrid werden zunehmend phthalsäureanhydrid-freie VPI-Imprägnierharze eingesetzt. Aus der WO2016/124387 ist beispielsweise ein Isoliersystem auf Basis eines Epoxidharzes mit einem Phthalsäureanhydrid-freien VPI-Imprägnierharz bekannt.

Das Glimmschutzband umfasst auf einem flexiblen Träger wie Folie, Vlies und/oder Gewebe, das nachfolgend als Trägerband bezeichnet wird, ein aufgebrachtes elektrisch leitfähiges und/oder halbleitfähiges Material, das mit dem Trägerband und miteinander und gegebenenfalls mit einer abschließenden Decklage und/oder eines weiteren Lage mittels eines Bandklebers, der eine polymere Matrix umfasst, verbunden ist.

Dieser Bandkleber umfasst den darin gelösten und/oder feinstverteilten Bandbeschleuniger. Der Bandbeschleuniger dient zur Gelierung eines dünnflüssigen Imprägnierharzes, das beispielsweise in einer Vakuum-Druck-Imprägnierung (VPI) auf die Ständerwicklungen aufgebracht wird. Nach dem Gelieren bei erhöhter Temperatur werden die imprägnierten Ständerwicklungen im Statorblechpaket thermisch gehärtet.

Die neu eingesetzten Band-Beschleunigersubstanzen für anhydridfreie, insbesondere phthalsäureanhydridfreie Imprägnierharze sind jedoch bislang noch nicht auf die polymeren Matrixmaterialien und/oder die Füllstoffe, respektive deren Beschichtungen in den Bandwicklungen abgestimmt, so dass es durch chemische Unverträglichkeit unter Umständen zu einer Entmischung und/oder Zersetzung der wertvollen Lackmaterialien, Füllstoffe, deren Beschichtungen und/oder Isolierbänder durch neuartige Band-Beschleuniger kommen kann.

Aufgabe der vorliegenden Erfindung ist es daher, ein Glimmschutzband zur Weiterverarbeitung im VPI-Verfahren bereitzustellen, ein Trägerband, zumindest einen eingelagerten Beschleuniger für das Imprägnierharz und ein polymeres Matrixmaterial mit einem elektrisch leitfähigen Füllstoff umfassend, wobei der eingelagerte Beschleuniger für das säureanhydridfreie VPI-Imprägnierharz auf Epoxidharzbasis härtungsbeschleunigend wirkt.

Diese Aufgabe wird durch den Gegenstand der vorliegenden Anmeldung, wie er in der Beschreibung und den Ansprüchen offenbart ist, gelöst.

Dementsprechend ist Gegenstand der vorliegenden Erfindung ein Glimmschutzband für die Weiter-Verarbeitung zur Wickelisolation mittels VPI-Imprägnierung, zumindest ein Trägerband mit Füllstoff in polymerer Matrix und zumindest einem eingelagertem Band-Beschleuniger für das Imprägnierharz umfassend, dadurch gekennzeichnet, dass die polymere Matrix zumindest einen Polyvinylalkohol als Bindemittel umfasst und dass der zumindest eine eingelagerte Band-Beschleuniger für das Imprägnierharz ausgewählt ist aus der Gruppe folgender chemischer Verbindungs-Klassen **I** bis **IV** und **VI** mit **R₂** an **IV** ist gleich oder ungleich und **R₂ = H, V :** 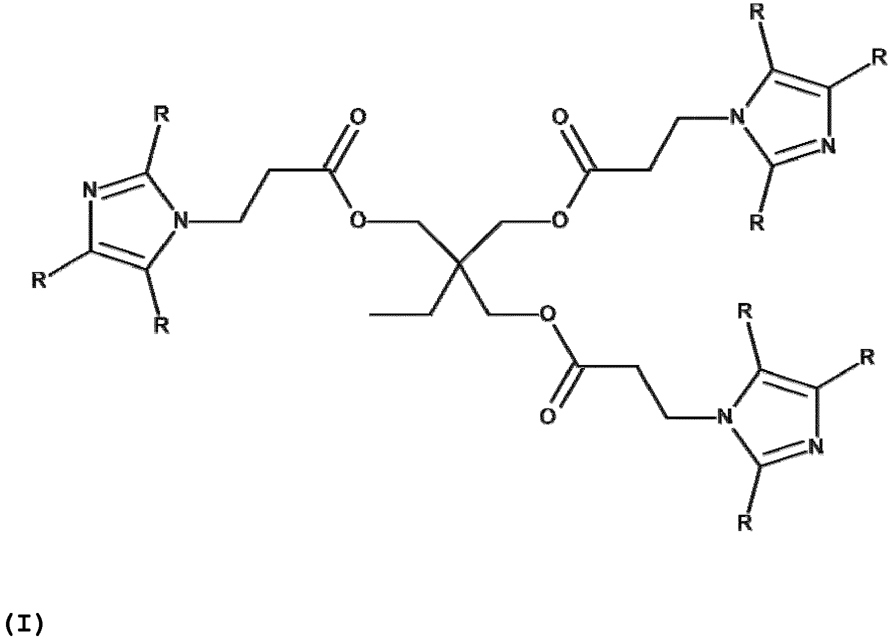 **(I)** ist ein Addukt aus TMPTA und einem oder mehreren 1H-Imidazol-derivat(en); beispielsweise mit **R** gleich oder ungleich und
**R** = H, Methyl, Ethyl, n-Propyl, iso-Propyl, n-Butyl, isoButyl, tert-Butyl, Phenyl und/oder mono-, di-, tri-, tetra-, pentasubstituiertes Phenyl,
wobei die Substituenten am Phenylrest **Rphenyl** wieder gleich oder ungleich und ausgewählt aus der folgenden Gruppe sein können:
**Rphenyl** = Alkyl (linear und verzweigt), Alkoxy, Fluor, Chlor, Brom, Iod, Aldehyd, Keton, Säureester, Säureamid, Phosphonsäurederivat und/oder Sulfonsäurederivat; 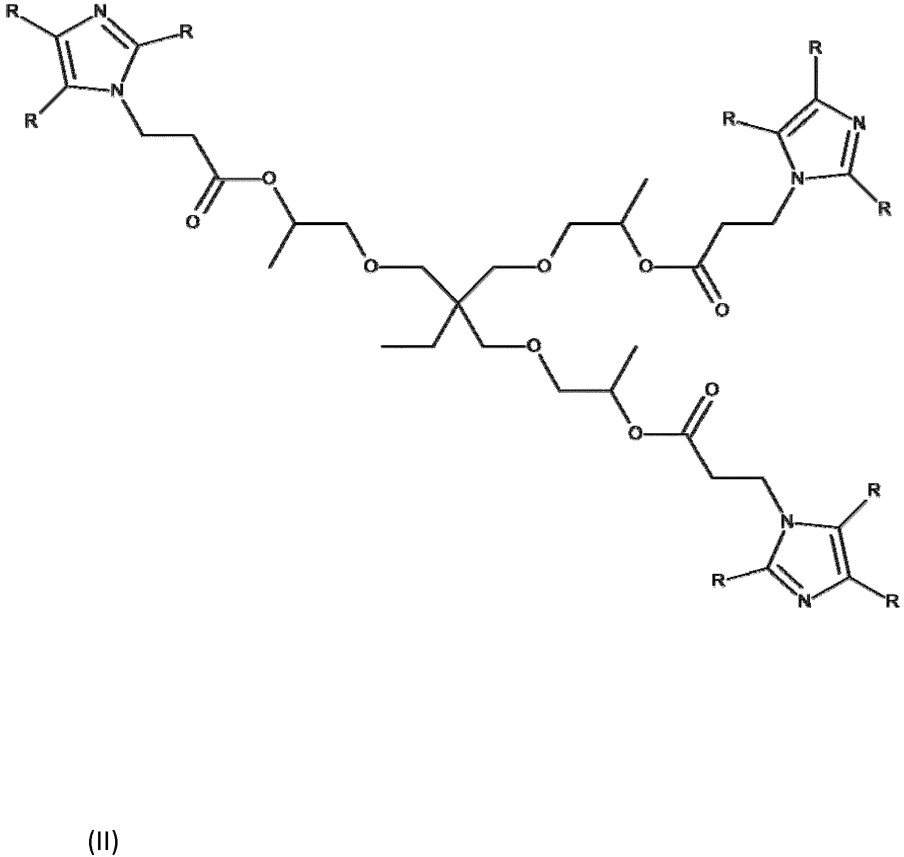
**(II)** stellt ein Addukt aus Trimethylolpropanpropoxylattriacrylat und 1H-Imidazolderivaten dar; beispielsweise mit
**R** gleich oder ungleich und
**R** = H, Methyl, Ethyl, n-Propyl, iso-Propyl, n-Butyl, isoButyl, tert-Butyl, Phenyl und/oder mono-, di-, tri-, tetra-, pentasubstituiertes Phenyl, wobei die Substituenten **Rphenyl** am Phenylrest wieder gleich oder ungleich und ausgewählt aus der folgenden Gruppe sein können:
**Rphenyl** = Alkyl (linear und verzweigt), Alkoxy, -F, -Cl, -Br, -J, Aldehyd, Keton, Säureester, Säureamid, Phosphonsäurederivat und/oder Sulfonsäurederivat; 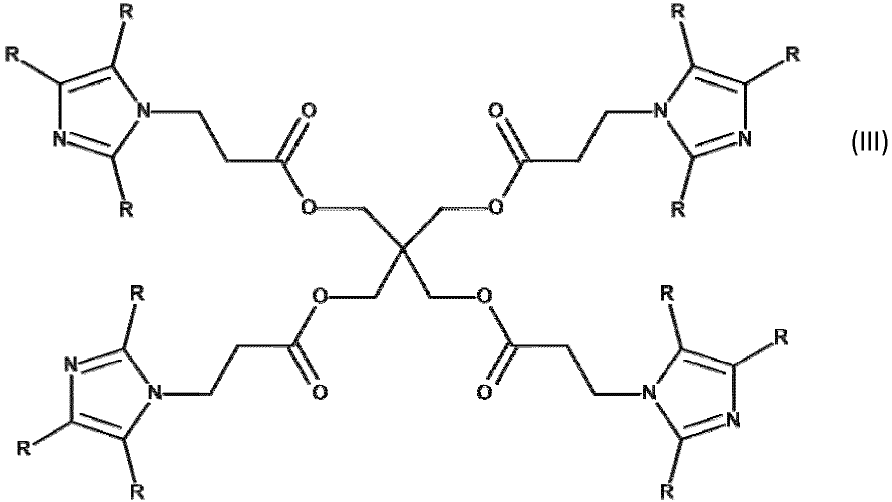
**(III)** stellt ein Addukt aus Pentaerythritoltetraacrylat (PETA) und einem oder mehreren 1H-Imidazolderivat(en) dar; beispielsweise mit **R** gleich oder ungleich und
**R** = H, Methyl, Ethyl, n-Propyl, iso-Propyl, n-Butyl, isoButyl, tert-Butyl, Phenyl und/oder mono-, di-, tri-, tetra-, pentasubstituiertes Phenyl,
wobei die Substituenten am Phenylrest **Rphenyl** wieder gleich oder ungleich und ausgewählt aus der folgenden Gruppe sein können:
**R_{phenyl}** = Alkyl (linear und/oder verzweigt), Alkoxy, Fluor, Chlor, Brom, Iod, Aldehyd, Keton, Säureester, Säureamid, Phosphonsäurederivat und/oder Sulfonsäurederivat; 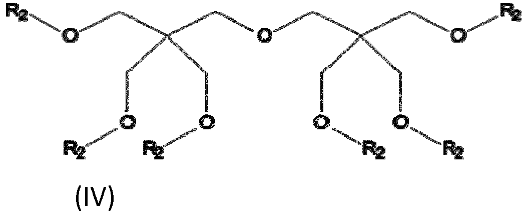 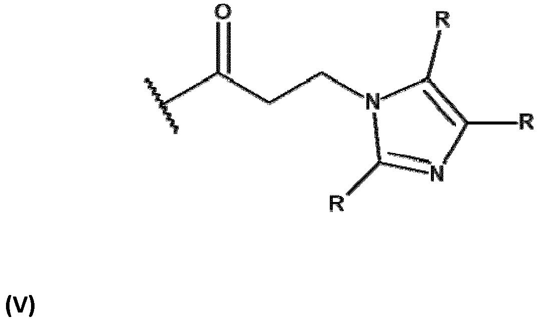
wobei R₂ der Struktur (**IV**) ein Wasserstoffatom oder die hier gezeigte funktionelle Gruppe (**V**) sein kann und
**(IV)** ist ein Addukt aus Dipentaerythritolpenta-/hexaacrylat (DPHA) und einem oder mehreren 1H-Imidazolderivat(en); beispielsweise mit **R** gleich oder ungleich und
**R** = H, Methyl, Ethyl, n-Propyl, iso-Propyl, n-Butyl, isoButyl, tert-Butyl, Phenyl und/oder mono-, di-, tri-, tetra-, pentasubstituiertes Phenyl, wobei die Substituenten am Phenylrest **Rphenyl** wieder gleich oder ungleich und ausgewählt aus der folgenden Gruppe sein können:
**Rphenyl** = Alkyl (linear und verzweigt), Alkoxy, Fluor, Chlor, Brom, Iod, Aldehyd, Keton, Säureester, Säureamid, Phosphonsäurederivat und/oder Sulfonsäurederivat und **R2** wie oben (**V**) angegeben;
und **VI** einer Komplex-Verbindung aus Metallsalzen, insbesondere Übergangsmetallsalzen, insbesondere komplexen Salzen des Zink, Kupfer, Eisen und/oder Aluminium mit Imidazol- und/oder Pyrazolliganden, abgeleitet von den Strukturen **VIa** und **VIb** 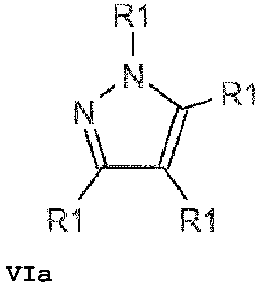 und 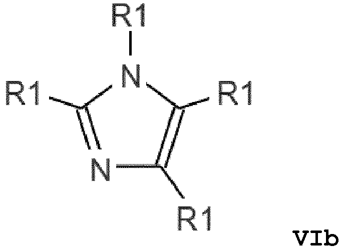 wobei gilt
   R1 = gleich oder ungleich und H-, Alkyl-, Aryl-, Acyl-, Cyanoalkyl-, Hydroxyalkyl-, Cyanoaryl- und/oder Hydroxyaryl ist.

Insbesondere Imidazole und/oder Pyrazole, ausgewählt aus der Liste folgender Verbindungen sind hier erfolgreich als Liganden für die Komplexverbindungen einsetzbar:
1,2-Dimethylimidazol (CAS 1739-84-0),
1-Decyl-2-Methylimidazol,
1-Butyl-2-Methylimidazol,
1-Butyl-2-Phenylimidazol,
1H-2-Methylimidazol (CAS-Nr. 693-98-1),
1H-Imidazol (CAS-Nr. 288-32-4),
1H-2-Ethylimidazol (CAS-Nr. 1072-62-4),
1H-2-Propylimidazol (CAS-Nr. 50995-95-4),
1H-2-iso-Propylimidazol (CAS-Nr. 36947-68-9),
1H-2-Butylimidazol (CAS-Nr. 50790-93-7),
1H-2-iso-Butylimidazol (CAS-Nr. 61491- 92-7),
1H-2-tert-Butylimidazol (CAS-Nr. 36947-69-0),
1H-4-tert-Butylimidazol (CAS-Nr. 21149-98-4),
1H-4 (5) -Methylimidazol (CAS-Nr. 822-36-6),
1H-2-Ethyl-4-Methylimidazol (CAS-Nr. 931-36-2),
1H-4-Methyl-2-Phenylimidazol (CAS-Nr. 827-43-0),
1H-4-Phenylimidazol (CAS-Nr. 670-95-1),
1H-5-Methyl-2-Phenylimidazol-4-methanol (CAS-Nr. 13682-32-1),
1H-2,4-Dimethylimidazol (CAS-Nr. 930-62-1),
4(5)-(Hydroxymethyl)imidazol (CAS.-Nr. 822-55-9),
1H-3-Phenylpyrazol (CAS-Nr. 2458-26-6),
1H-5-Methylpyrazol (keine CAS-Nr.),
1H-3,4-Dimethylpyrazol (CAS-Nr. 2820-37-3),
1H-3-tert-Butylpyrazol (CAS-Nr. 15802-80-9),
1H-4-Ethylpyrazol (CAS-Nr. 17072-38-7),
1H-Pyrazol (CAS-Nr. 288-3-1),
1H-3,5-Dimethylpyrazol (CAS-Nr. 67-51-6).

Nach einer vorteilhaften Ausführungsform der Erfindung ist im Trägerband und/oder in der polymeren Matrix zumindest ein Band-Beschleuniger der Art, wie sie Gegenstand der Anmeldungen DE 102015214872, der DE 10 2016223656.3 und/oder DE 102016223662.8 sind, eingelagert.

Der zumindest eine Band-Beschleuniger kann im Lack, also in der polymeren Matrix mit Füllstoff und/oder in Poren des Trägerbandes eingelagert und so dem VPI-Imprägnierharz zugänglich sein.

Der Beschleuniger im Trägerband ist beispielsweise in einer Menge im Bereich von 0,1 g/m² bis 15 g/m², insbesondere von 0,5 g/m² bis 10 g/m², bevorzugt in einer Menge von 2 g/m² bis 7 g/m² enthalten.

Dabei können die eingelagerten Band-Beschleuniger gleich oder ungleich sein.

Nach einer vorteilhaften Ausführungsform der Erfindung ist das VPI-Imprägnierharz der elektrischen Maschine ein säureanhydridfreies, insbesondere Phthalsäureanhydrid-freies, Harz auf Epoxidbasis, bevorzugt zumindest ein Epoxidharz auf Bisphenol-A- und/oder Bisphenol-F-Diglycidylether- und/oder Epoxynovolak-Basis. Beispielsweise liegt zumindest ein Imprägnierharz auf der Basis von Bisphenol-A- und/oder Bisphenol-F-Diglycidylether- und/oder Epoxynovolak vor.

Das Band, das zur Herstellung der Isolationswicklung eingesetzt wird umfasst zumindest ein Bindemittel, in der Regel polymeres Matrixmaterial und planare Füllstoffe in zumindest einer Fraktion nach Material, Form, Größe, die gegebenenfalls eine Beschichtung aufweisen.

Nach einer vorteilhaften Ausführungsform der Erfindung umfasst die polymere Matrix mehrere Polyvinylalkohol(e).

Polyvinylalkohol mit der CAS Nummer 9002-89-5 und der Summenformel (-C₂H₄O-)ₙ der Wiederholeinheit, ist ein Thermoplast und liegt handelsüblich als ein kristalliner, weiß bis gelblicher wasserlöslicher Kunststoff vor.

Im Gegensatz zu den meisten Vinylpolymeren kann Polyvinylalkohol nicht durch einfache Polymerisation des entsprechenden Monomers hergestellt werden. Das dafür notwendige Monomer Ethenol existiert lediglich in seiner tautomeren Form als Acetaldehyd. Polyvinylalkohole werden durch Umesterung und/oder durch alkalische Verseifung von Polyvinylacetat gewonnen. Die Hydrolyse ist gut steuerbar. Es gibt Polyvinylalkohol-Copolymerisate und verschiedene Derivate, bei denen ein Teil der Hydroxylgruppen durch chemisch ähnliche reagierende Gruppen wie Siloxane ersetzt sind.

Polyvinylalkohole sind in der Regel leicht verzweigt, bedingt durch Kettenübertragungen bei der Synthese von Polyvinylacetat. Der Polymerisationsgrad beträgt etwa 500 bis 2500. Teilverseifte Sorten von Polyvinylalkohol - kurz PVAL genannt - mit ca. 13 % Polyvinylacetat -kurz PVAC - sind gut wasserlöslich mit steigendem Verseifungsgrad nimmt die Wasserlöslichkeit ab.

Nach einer vorteilhaften Ausführungsform der Erfindung umfasst die polymere Matrix im Band Polyvinylalkohol mit quervernetzten Anteilen.

Nach einer vorteilhaften Ausführungsform umfasst die polymere Matrix im Band einen oder mehrere mit einem Aldehydmodifizierten Melamin quervernetzte Polyvinylalkohol(e).

Nach einer vorteilhaften Ausführungsform der Erfindung umfasst die polymere Matrix zumindest ein polymeres Bindemittel, das ein Polyvinylalkohol ist, der einen Hydrolysegrad von mindestens 80 mol%, insbesondere mindestens 85 mol% und bevorzugt von mindestens 87 oder mehr mol% hat.

Nach einer weiteren vorteilhaften Ausführungsform der Erfindung umfasst die polymere Matrix zumindest einen Polyvinylalkohol, bei dem die Hydroxylgruppen des Polyvinylalkohols zumindest teilweise durch Siloxangruppen substituiert sind.

Nach einer vorteilhaften Ausführungsform der Erfindung umfasst der elektrisch leitfähige Füllstoff hauptsächlich Komponenten wie beispielsweise eine Kohlenstoffmodifikation - bevorzugt als Ruß, Graphit und/oder Carbon Nanotubes.

Nach einer weiteren vorteilhaften Ausführungsform der Erfindung umfasst der elektrisch leitfähige Füllstoff ein Siliziumcarbid, insbesondere ein dotiertes Siliziumcarbid. Nach einer weiteren vorteilhaften Ausführungsform der Erfindung umfasst der elektrisch leitfähige Füllstoff Partikel, die zumindest zum Teil aus Metalloxid, insbesondere einem Mischoxid, sind.

Als Metalloxid wird vorliegend eine Verbindung zwischen einem Metall und Sauerstoff bezeichnet, wobei der Sauerstoff in der Verbindung formell, also vereinfacht, 2-fach negativ geladen ist. Grundsätzlich ist der Sauerstoff in der Verbindung der elektronegative Partner. Daher die Bezeichnung "-oxid".

Als Mischoxid - kurz MOX - wird entsprechend eine Substanz bezeichnet, in der mehr als ein Metall-Kation in einer oxidischen Verbindung vorliegt, also beispielsweise Titan-Aluminium-Oxid oder Eisen-Nickel-Oxid oder ähnliches.

Nach einer vorteilhaften Ausführungsform der Erfindung wird ein Füllstoff eingesetzt, der eine Beschichtung aus einem dotierten Zinnoxid und/oder einem dotierten Titanoxid hat und/oder der aus einem dotierten Zinnoxid und/oder Titanoxid besteht.

Die Füllstoffpartikel können als Hohlkörper, als massive Teilchen, als beschichtete Teilchen und/oder als Core-Shell-Partikel vorliegen.

Nach einer vorteilhaften Ausführungsform der Erfindung macht der elektrisch leitfähige Füllstoff mindestens 45 Gew% der Füllstoff-Bindemittel-Massenteile, die das Trägerband bilden, aus.

Das Trägerband wird verwendet, um die Wickelisolierung herzustellen. Das Trägerband umfasst zumindest eine Fraktion plättchenförmiger Partikel, die durch ein Bindemittel zusammengehalten werden und somit das Band bilden. Zur Einstellung des elektrischen Widerstands kann es dabei vorteilhaft sein, die Fraktion an plättchenförmigen Füllstoffpartikeln mit kugelförmigen, also globularen Füllstoffpartikeln zu ergänzen.

Nach einer vorteilhaften Ausführungsform der Erfindung hat das Trägerband ein Flächengewicht von < 100 g/m².

Nach einer vorteilhaften Ausführungsform umfasst das Trägerband Verstärkungsfasern, beispielsweise in Form eines Gewebes und/oder eines Faserverbunds, in den die polymere Matrix mit dem elektrisch leitfähigen Füllstoff eingebracht ist und/oder mit dem sie durch das Bindemittel verklebt ist.

Diese Verstärkungsfasern sind beispielsweise Glasfasern und/oder Polyethylenterephthalat - PET-Fasern.

Nach einer vorteilhaften Ausführungsform ist das Trägerband mit einer Primerung beschichtet. Dabei ist es insbesondere vorteilhaft, wenn das Trägerband mit einer Primerung von bis zu 5 g/m² beschichtet ist.

Insbesondere hat sich als vorteilhaft erwiesen, wenn die Primerung des Trägerbandes Polyvinylalkohol, Epoxy- und/oder Aminfunktionalitäten umfasst-.

Als Primerung wird vorliegend eine grundierende Beschichtung bezeichnet, durch die die Verstärkungsfasern und/oder das Trägerband, -gewebe in ihrer Schnittfestigkeit verbessert werden und für eine Benetzung mit der polymeren Matrix vorbereitet werden.

Nach einer vorteilhaften Ausführungsform der Erfindung liegt die Menge der Beschichtung des Trägerbandes mit der polymeren Matrix, die die zumindest eine Fraktion an elektrisch leitfähigem Füllstoff und/oder gegebenenfalls auch den zumindest einen Band-Beschleuniger enthält im Bereich von 20 g/m² bis 100 g/m², insbesondere im Bereich von 20 g/m² bis 60 g/m², besonders bevorzugt im Bereich von 30 g/m² bis 45 g/m².

Nach einer vorteilhaften Ausführungsform der Erfindung wird das Glimmschutzband zur Herstellung eines Außenglimmschutzsystems und/oder eines Innenpotentialsteuerungssystems und/oder eines Endenglimmschutzsystems eingesetzt.

Dabei ist es vorteilhaft, wenn der Quadrat- und/oder Flächenwiderstand eines durch ein Glimmschutzband gemäß der vorliegenden Erfindung hergestellten Außenglimmschutzsystems und/oder eines Innenpotentialsteuerungssystems im Bereich von 0,01 kOhm bis 100 kOhm, gemessen bei einer Feldstärke von 1 V/mm liegt.

Insbesondere liegen die Quadrat und/oder Flächenwiderstandswerte einer derartigen Innenpotentialsteuerung bevorzugt im Bereich von 0,01 kOhm bis 10 kOhm, bevorzugt im Bereich von 0,05 bis 7 kOhm und besonders bevorzugt im Bereich von 2,5 bis 5 kOhm und/oder die Quadratwiderstandswerte eines derartigen Außenglimmschutzes im Bereich von 0,1 bis 100 kOhm, insbesondere von 0,1 kOhm bis 90 kOhm und besonders bevorzugt im Bereich von 5 kOhm bis 50 kOhm, jeweils gemessen bei einer Feldstärke von 1 V/mm.

Bei der Herstellung eines Endenglimmschutzes mittels eines Glimmschutzbandes gemäß der vorliegenden Erfindung ist es vorteilhaft, wenn ein Flächenwiderstand im Bereich von 1x10⁸ bis 1 x 10¹², insbesondere im Bereich von 1x10⁸ bis 1x10¹³ Ohm bei einer Feldstärke von 1 V/mm vorliegt.

Die Erfindung betrifft ein Glimmschutzband für eine elektrische Hochspannungsmaschine mit phthalsäureanhydridfreien Epoxidharzen. Das hier erstmals vorgestellte Glimmschutzband ist mit seinen Komponenten, insbesondere der verbindenden polymeren Matrix und dem eingelagerten Band-Beschleuniger auf die neuen phthalsäureanhydrid-freien VPI-Imprägnierharze auf Epoxidharzbasis eingestellt. Dazu liegt in der polymeren Matrix zumindest ein Anteil an Polyvinylalkohol vor.

## Patentansprüche

1. Glimmschutzband für die Weiter-Verarbeitung zur Wickelisolation mittels VPI-Imprägnierung mit einem anhydridfreien, insbesondere phthalsäureanhydridfreiem Imprägnierharz, zumindest ein Trägerband, eine polymere Matrix mit eingebettetem elektrisch leitfähigen und/oder halbleitfähigen Füllstoff und zumindest einen eingelagerten Band-Beschleuniger für das Imprägnierharz umfassend, **dadurch gekennzeichnet, dass** die polymere Matrix zumindest einen Polyvinylalkohol umfasst und dass der eingelagerte Band-Beschleuniger für das Imprägnierharz ausgewählt ist aus der Gruppe folgender chemischer Verbindungs-Klassen **I** bis **IV** und **VI** mit **R₂** an **IV** ist gleich oder ungleich und **R₂ = H, V :** 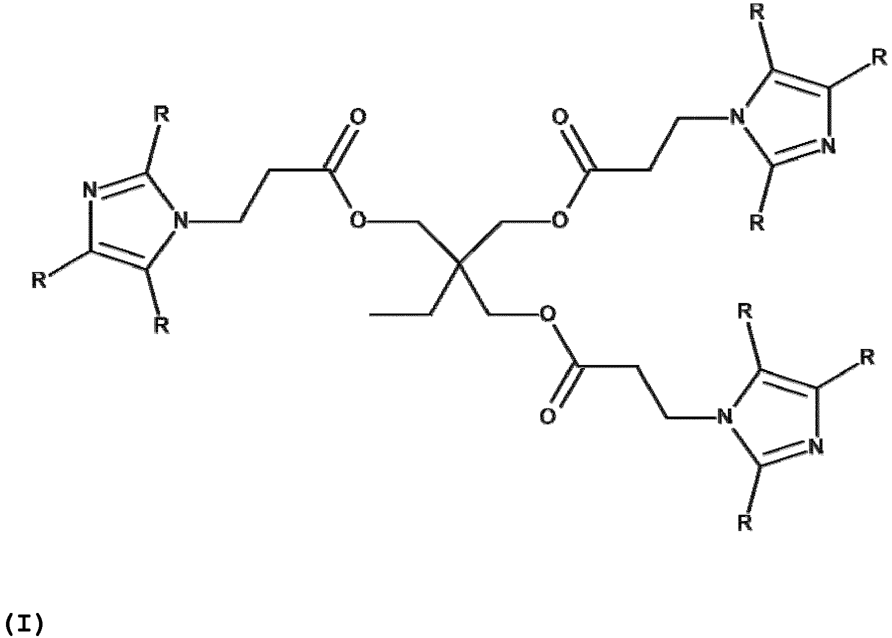 - **(I)** ist ein Addukt aus TMPTA und einem oder
mehreren 1H-Imidazol-derivat(en); beispielsweise mit **R** gleich oder ungleich und
**R** = H, Methyl, Ethyl, n-Propyl, iso-Propyl, n-Butyl, isoButyl, tert-Butyl, Phenyl und/oder mono-, di-, tri-, tetra-, pentasubstituiertes Phenyl,
wobei die Substituenten am Phenylrest **Rphenyl** wieder gleich oder ungleich und ausgewählt aus der folgenden Gruppe sein können:
**Rphenyl** = Alkyl (linear und verzweigt), Alkoxy, Fluor, Chlor, Brom, Iod, Aldehyd, Keton, Säureester, Säureamid, Phosphonsäurederivat und/oder Sulfonsäurederivat; 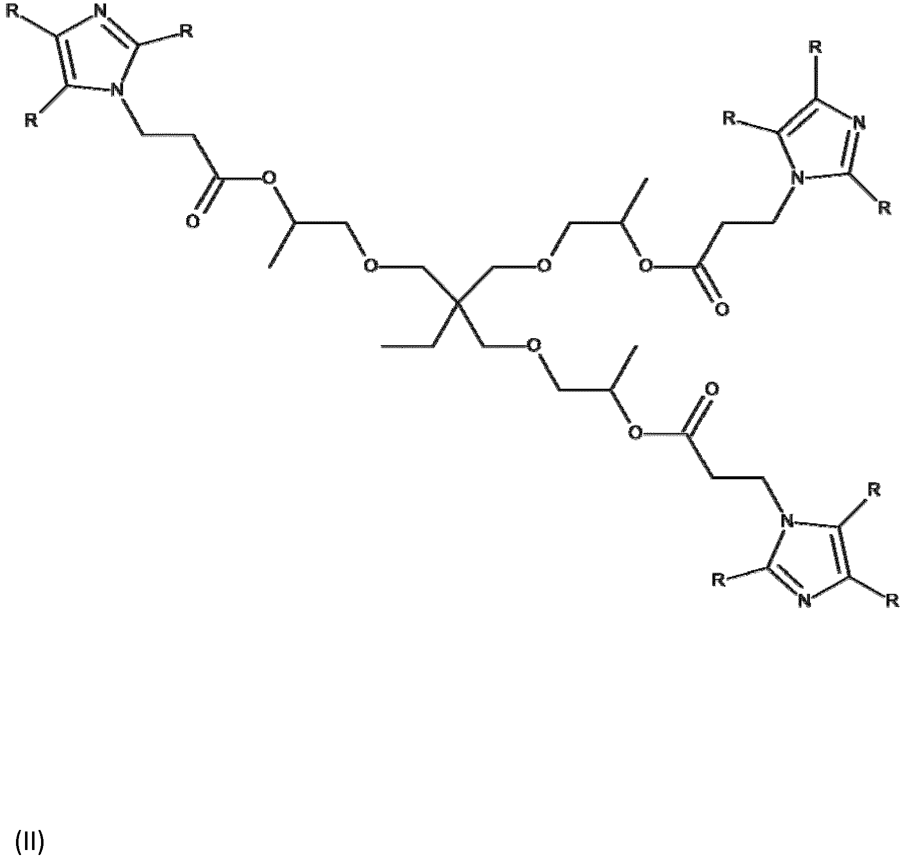
- **(II)** stellt ein Addukt aus Trimethylolpropanpropoxylattriacrylat und 1H-Imidazolderivaten dar; beispielsweise mit
**R** gleich oder ungleich und
**R** = H, Methyl, Ethyl, n-Propyl, iso-Propyl, n-Butyl, isoButyl, tert-Butyl, Phenyl und/oder mono-, di-, tri-, tetra-, pentasubstituiertes Phenyl, wobei die Substituenten **Rphenyl** am Phenylrest wieder gleich oder ungleich und ausgewählt aus der folgenden Gruppe sein können:
**Rphenyl** = Alkyl (linear und verzweigt), Alkoxy, -F, -Cl, -Br, -J, Aldehyd, Keton, Säureester, Säureamid, Phosphonsäurederivat und/oder Sulfonsäurederivat; 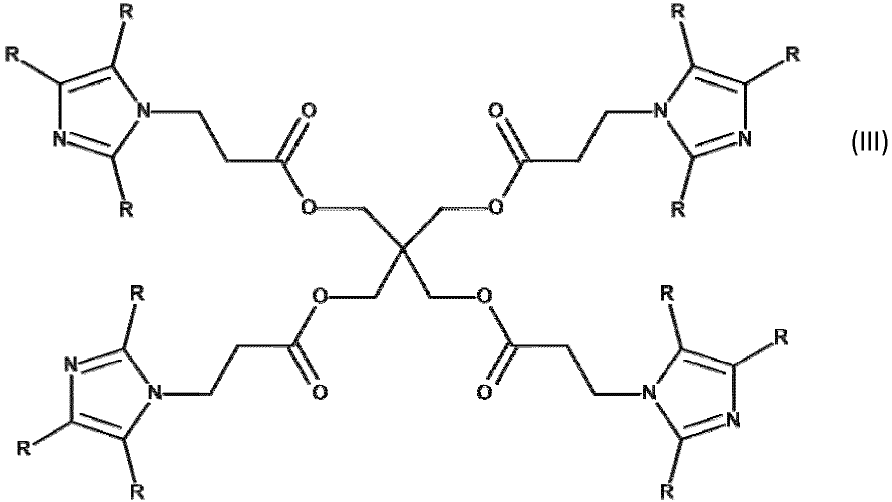
- **(III)** stellt ein Addukt aus Pentaerythritoltetraacrylat (PETA) und einem oder mehreren 1H-Imidazolderivat(en) dar;
beispielsweise mit **R** gleich oder ungleich und
**R** = H, Methyl, Ethyl, n-Propyl, iso-Propyl, n-Butyl, isoButyl, tert-Butyl, Phenyl und/oder mono-, di-, tri-, tetra-, pentasubstituiertes Phenyl,
wobei die Substituenten am Phenylrest **Rphenyl** wieder gleich oder ungleich und ausgewählt aus der folgenden Gruppe sein können:
**R_{phenyl}** = Alkyl (linear und/oder verzweigt), Alkoxy, Fluor, Chlor, Brom, Iod, Aldehyd, Keton, Säureester, Säureamid, Phosphonsäurederivat und/oder Sulfonsäurederivat; 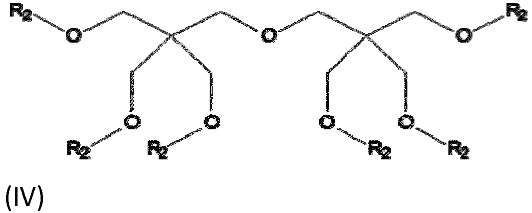 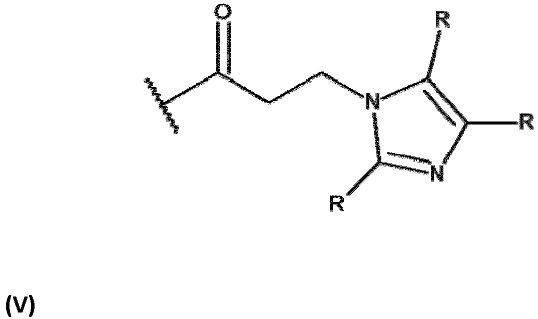
wobei **R₂** = H, **V** der Struktur (**IV**) ein Wasserstoffatom oder die hier gezeigte funktionelle Gruppe (**V**) sein kann;
- **(IV)** ist ein Addukt aus Dipentaerythritolpenta-/hexaacrylat (DPHA) und einem oder mehreren 1H-Imidazolderivat(en); beispielsweise mit **R** gleich oder ungleich und
**R** = H, Methyl, Ethyl, n-Propyl, iso-Propyl, n-Butyl, isoButyl, tert-Butyl, Phenyl und/oder mono-, di-, tri-, tetra-, pentasubstituiertes Phenyl, wobei die Substituenten am Phenylrest **Rphenyl** wieder gleich oder ungleich und ausgewählt aus der folgenden Gruppe sein können:
**Rphenyl** = Alkyl (linear und verzweigt), Alkoxy, Fluor, Chlor, Brom, Iod, Aldehyd, Keton, Säureester, Säureamid, Phosphonsäurederivat und/oder Sulfonsäurederivat und
**R2** wie oben (**V**) angegeben;
und
- **(VI)** einer Komplex-Verbindung aus Metallsalzen, insbesondere Übergangsmetallsalzen, insbesondere Salzen des Zink, Kupfer, Eisen und/oder Aluminium mit Imidazol- und/oder Pyrazolliganden, abgeleitet von den Strukturen **VIa** und **VIb** 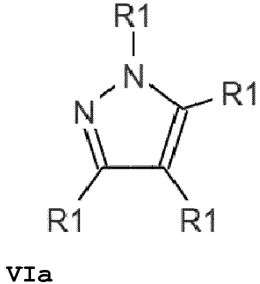 und 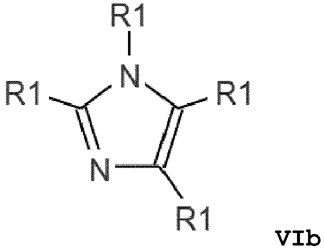 wobei gilt
R1 = gleich oder ungleich und
R1 = H-, Alkyl-, Aryl-, Acyl-, Cyanoalkyl-, Hydroxyalkyl-, Cyanoaryl- und/oder Hydroxyaryl ist.

2. Glimmschutzband nach Anspruch 1, in dem mehrere Band-Beschleuniger eingelagert sind.

3. Glimmschutzband nach einem der vorstehenden Ansprüche 1 oder 2, bei dem der oder die Bandbeschleuniger in der polymeren Matrix und/oder dem Trägerband eingelagert sind.

4. Glimmschutzband nach einem der vorstehenden Ansprüche, wobei als Liganden für die komplexen Salze gemäß der Struktur **VI** zumindest ein Ligand, ausgewählt aus der Liste folgender Liganden, eingesetzt ist:
1,2-Dimethylimidazol (CAS 1739-84-0),
1-Decyl-2-Methylimidazol,
1-Butyl-2-Methylimidazol,
1-Butyl-2-Phenylimidazol,
1H-2-Methylimidazol (CAS-Nr. 693-98-1),
1H-Imidazol (CAS-Nr. 288-32-4),
1H-2-Ethylimidazol (CAS-Nr. 1072-62-4),
1H-2-Propylimidazol (CAS-Nr. 50995-95-4),
1H-2-iso-Propylimidazol (CAS-Nr. 36947-68-9),
1H-2-Butylimidazol (CAS-Nr. 50790-93-7),
1H-2-iso-Butylimidazol (CAS-Nr. 61491- 92-7),
1H-2-tert-Butylimidazol (CAS-Nr. 36947-69-0),
1H-4-tert-Butylimidazol (CAS-Nr. 21149-98-4),
1H- 4(5)-Methylimidazol (CAS-Nr. 822-36-6),
1H-2-Ethyl-4-Methylimidazol (CAS-Nr. 931-36-2),
1H-4-Methyl-2-Phenylimidazol (CAS-Nr. 827-43-0),
1H-4-Phenylimidazol (CAS-Nr. 670-95-1),
1H-5-Methyl-2-Phenylimidazol-4-methanol (CAS-Nr. 13682-32-1),
1H-2,4-Dimethylimidazol (CAS-Nr. 930-62-1),
4(5)-(Hydroxymethyl)imidazol (CAS.-Nr. 822-55-9),
1H-3-Phenylpyrazol (CAS-Nr. 2458-26-6),
1H-5-Methylpyrazol (keine CAS-Nr.),
1H-3,4-Dimethylpyrazol (CAS-Nr. 2820-37-3),
1H-3-tert-Butylpyrazol (CAS-Nr. 15802-80-9),
1H-4-Ethylpyrazol (CAS-Nr. 17072-38-7),
1H-Pyrazol (CAS-Nr. 288-3-1),
1H-3,5-Dimethylpyrazol (CAS-Nr. 67-51-6).

5. Glimmschutzband nach einem der vorstehenden Ansprüche, bei dem Beschleuniger in einer Menge im Bereich von 0,1 g/m² bis 15 g/m², eingelagert ist.

6. Glimmschutzband nach einem der vorstehenden Ansprüche, wobei der in der polymeren Matrix eingebettete Füllstoff globulare, planare, tubulare Füllstoffpartikel und/oder Füllstoffmischungen umfasst.

7. Glimmschutzband nach einem der vorstehenden Ansprüche, wobei die polymere Matrix mehrere Polyvinylalkohole umfasst.

8. Glimmschutzband nach einem der vorstehenden Ansprüche, wobei die polymere Matrix zumindest einen Polyvinylalkohol mit quervernetzten Anteilen umfasst.

9. Glimmschutzband nach einem der vorstehenden Ansprüche, das eine Primerung aufweist.

10. Glimmschutzband nach einem der vorstehenden Ansprüche, das ein Gewicht von kleiner 150 g/m² hat.

11. Glimmschutzband nach einem der vorstehenden Ansprüche, das auf dem Trägerband eine Beschichtung in einer Menge im Bereich von 20 g/m² bis 100 g/m², insbesondere im Bereich von 20 g/m² bis 60 g/m², besonders bevorzugt im Bereich von 30 g/m² bis 45 g/m² hat.

12. Glimmschutzband nach einem der vorstehenden Ansprüche, Füllstoffpartikel umfassend, die in Form von Hohlkörper, massiven Teilchen, beschichteten Teilchen, dotiert und/oder undotiert und/oder als Core-Shell-Teilchen, sowie beliebiger Mischungen daraus, vorliegen.

13. Glimmschutzband nach einem der vorstehenden Ansprüche, mit elektrisch leitfähigem Füllstoff, der Füllstoffpartikel aus den Materialien, Ruß, Graphit, Carbon Nanotubes, Silziumcarbid und/oder Metalloxid, jeweils dotiert oder undotiert, beschichtet oder unbeschichtet vorliegend, sowie beliebige Mischungen daraus, umfasst.

14. Verwendung eines Glimmschutzbandes nach einem der vorhergehenden Ansprüche 1 bis 13 zur Herstellung eines Außenglimmschutzes, einer Innenpotentialsteuerung und/oder eines Endenglimmschutzes einer elektrischen Hochspannungsmaschine.

15. Isoliersystem einer elektrischen Hochspannungsmaschine, eine Innenpotentialsteuerung, einen Außenglimmschutz und/oder einen Endenglimmschutz sowie beliebige Kombinationen daraus mit einem Glimmschutzband nach einem der Ansprüche 1 bis 13 umfassend, das einen Quadratwiderstand im Bereich von 0,01 kOhm bis 10 kOhm für die Innenpotentialsteuerung, im Bereich von 0,1 bis 100 kOhm für den Außenglimmschutz und im Bereich von 1 x 10⁸ bis 1 x 10¹³ Ohm gemessen bei einer Feldstärke von 1V/mm zeigt.
